(19) Europäisches Patentamt / European Patent Office / Office européen des brevets

(11) **EP 3 425 187 A1**

(12) **EUROPÄISCHE PATENTANMELDUNG**

(43) Veröffentlichungstag:
**09.01.2019 Patentblatt 2019/02**

(21) Anmeldenummer: **17180191.3**

(22) Anmeldetag: **07.07.2017**

(51) Int Cl.:
*F02B 77/11* (2006.01)    *C08G 18/08* (2006.01)
*C08G 18/40* (2006.01)    *C08G 18/76* (2006.01)
*C08G 101/00* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **FLAMMGESCHÜTZE ISOLIERUNG FÜR VERBRENNUNGSMOTOREN**

(57)    Die Erfindung betrifft ein Verfahren zur Herstellung einer thermischen und akustischen Isolierung für Verbrennungsmotoren unter Verwendung von Polyurethanschaumstoffen, die erhältlich sind durch Umsetzung von Di-und/oder Polyisocyanaten mit füllstoffhaltigen Polyolen, wobei der Füllstoff ein Reaktionsprodukt aus Di- und oder Polyisocyanaten mit gegenüber Isocyanaten reaktionsfähigen Wasserstoffatomen aufweisenden Verbindungen ist, in Gegenwart von Wasser und/oder physikalischen Treibmitteln, so wie die Thermisch und akustische Isolierung für Verbrennungsmotoren selbst.

EP 3 425 187 A1

**Beschreibung**

Die Erfindung betrifft die Verwendung von Polyurethanschaumstoffen, die erhältlich sind durch Umsetzung von Di-und/oder Polyisocyanaten mit füllstoffhaltigen Polyolen, wobei der Füllstoff ein Reaktionsprodukt aus Di- und oder Polyisocyanaten mit gegenüber Isocyanaten reaktionsfähigen Wasserstoffatomen aufweisenden Verbindungen ist, in Gegenwart von Wasser und/oder physikalischen Treibmitteln, zur Herstellung einer thermischen und akustischen Isolierung für Verbrennungsmotoren, sowie die mittels der erfindungsgemäßen Verwendung erhältlichen thermischen und akustischen Isolierung für Verbrennungsmotoren.

Aus dem Stand der Technik (DE 199 35 335, WO-A 2014/195153) sind thermische und akustische Isolierungen für Verbrennungsmotoren, insbesondere in Kraftfahrzeugen bekannt. Thermische Isolierungen verringern die Warmlaufphase des noch kalten Motors nach dem Start und helfen somit den Verschleiß des Motors, sowie den erhöhten Kraftstoffverbrauch und die damit einhergehende höhere Emission von Schadstoffen zu verringern. Um eine möglich gute Schallisolierung zu gewährleisten werden im Stand der Technik komplette Umkapselungen des Motorengehäuses vorgeschlagen. Als Material für die Isolierungen werden ganz allgemein Polyurethanschäume beschrieben.

Verbrennungsmotoren werden sehr heiß. Es ist daher wichtig, dass das Material, aus dem die Isolierungen bestehen, nur schwer entflammbar ist.

Die Aufgabe der vorliegenden Erfindung war daher die Bereitstellung einer thermischen und akustischen Isolierung für Verbrennungsmotoren mit guten Flammschutzeigenschaften. Insbesondere sollen die Flammschutzanforderungen gemäß FMVSS302 erfüllt sein.

Aus dem Stand der Technik (WO-A 2011/003590, EP-A 0 358 021, EP-A 0 358 950, EP-A 0 373 462, EP-A 0373 457, WO-A 2009/106236) ist bekannt, dass die Verwendung gefüllter Polyetherpolyole in Kombination mit üblichen Flammschutzmitteln bei der Herstellung von Polyurethanschäumen die Wirkung der Flammschutzmittel weiter erhöht.

Keines dieser Dokumente des Standes der Technik, welche sich mit der Isolierung von Verbrennungsmotoren beschäftigen, offenbaren die Verwendung von Polyurethanen basierend auf gefüllten Polyetherpolyolen zur Herstellung von Isolierungen mit guten Flammschutzeigenschaften, noch legen diese Dokumente oder eine Kombination davon eine solche Verwendung nahe.

Gegenstand der vorliegenden Erfindung ist ein Verfahren zur Herstellung einer thermischen und akustischen Isolierung für Verbrennungsmotoren unter Verwendung von Polyurethanschaumstoffen, die erhältlich sind durch Umsetzung von Di-und/oder Polyisocyanaten mit füllstoffhaltigen Polyolen, wobei der Füllstoff ein Reaktionsprodukt aus Di- und oder Polyisocyanaten mit gegenüber Isocyanaten reaktionsfähigen Wasserstoffatomen aufweisenden Verbindungen ist, in Gegenwart von Wasser und/oder physikalischen Treibmitteln.

Weiterer Gegenstand ist insbesondere ein Verfahren zur Herstellung einer thermischen und akustischen Isolierung für Verbrennungsmotoren unter Verwendung von Polyurethanschaumstoffen, wobei die Polyurethanschaumstoffe erhältlich sind durch Umsetzung von

A1   füllstoffhaltigen Polyolen, wobei der Füllstoff ein Reaktionsprodukt aus Di- und oder Polyisocyanaten mit gegenüber Isocyanaten reaktionsfähigen Wasserstoffatomen aufweisenden Verbindungen ist,

A2   gegebenenfalls weiteren füllstoffhaltigen Polyolen, die nicht unter die Definition der Komponente A1 fallen,

A3   gegebenenfalls gegenüber Isocyanaten reaktionsfähige Wasserstoffatome aufweisende Verbindungen mit einem Molekulargewicht von 400 - 18000 g/mol, die nicht unter die Definition der Komponente A1 oder A2 fallen,

A4   gegebenenfalls gegenüber Isocyanaten reaktionsfähige Wasserstoffatome aufweisenden Verbindungen mit einem Molekulargewicht von 62 - 399 g/mol, die nicht unter die Definition der Komponente A1 oder A2 fallen,

A5   Wasser und/oder physikalische Treibmittel,

A6   gegebenenfalls Flammschutzmittel,

A7   ggf. Hilfs- und Zusatzstoffe wie

a) Katalysatoren,
b) oberflächenaktive Zusatzstoffe,
c) ein oder mehrere Additiven ausgewählt aus der Gruppe bestehend aus Reaktionsverzögerer, Zellregler, Pigmente, Farbstoffe, Stabilisatoren gegen Alterungs- und Witterungseinflüsse, Weichmacher, fungistatisch und bakteriostatisch wirkende Substanzen, Füllstoffe und Trennmittel,

und

B   Di- oder Polyisocyanaten,

wobei die füllstoffhaltigen Polyole gemäß Komponente A1 in Mengen eingesetzt werden, so dass der Füllstoffgehalt resultierend aus der Komponente A1 bezogen auf die Gesamtmenge der Komponenten A1, A2 und A3 2 bis 30 Gew.-

% Füllstoff beträgt.

Besonders bevorzugt ist ein Verfahren, wie zuvor beschrieben, wobei die Polyurethanschaumstoffe erhältlich sind durch Umsetzung von

100 Gewichtsteilen (Gew.-Teilen) einer Komponente bestehend aus A1, A2 und A3 mit der folgenden Zusammensetzung:

A1    füllstoffhaltige Polyole, wobei der Füllstoff ein Reaktionsprodukt aus Di- und oder Polyisocyanaten mit gegenüber Isocyanaten reaktionsfähigen Wasserstoffatomen aufweisenden Verbindungen ist,

A2    gegebenenfalls weitere füllstoffhaltige Polyole, die nicht unter die Definition der Komponente A1 fallen,

A3    gegebenenfalls gegenüber Isocyanaten reaktionsfähige Wasserstoffatome aufweisende Verbindungen mit einem Molekulargewicht von 400 - 18000 g/mol, die nicht unter die Definition der Komponente A1 oder A2 fallen,

A4    0 bis 10 Gew.-Teilen (bezogen auf 100 Gew.-Teile der Summe der Gewichtsteile der Komponenten A1 bis A3) gegenüber Isocyanaten reaktionsfähige Wasserstoffatome aufweisende Verbindungen mit einem Molekulargewicht von 62 - 399 g/mol, die nicht unter die Definition der Komponente A1 oder A2 fallen,

A5    0,1 bis 10 Gew.-Teilen (bezogen auf 100 Gew.-Teile der Summe der Gewichtsteile der Komponenten A1 bis A3) Wasser und/oder physikalische Treibmittel,

A6    0 bis 20 Gew.-Teilen (bezogen auf 100 Gew.-Teile der Summe der Gewichtsteile der Komponenten A1 bis A3) Flammschutzmittel,

A7    0 bis 20 Gew.-Teilen (bezogen auf 100 Gew.-Teile der Summe der Gewichtsteile der Komponenten A1 bis A3) Hilfs- und Zusatzstoffen wie

a) Katalysatoren,
b) oberflächenaktive Zusatzstoffe,
c) ein oder mehrere Additiven ausgewählt aus der Gruppe bestehend aus Reaktionsverzögerer, Zellregler, Pigmente, Farbstoffe, Stabilisatoren gegen Alterungs- und Witterungseinflüsse, Weichmacher, fungistatisch und bakteriostatisch wirkende Substanzen, Füllstoffe und Trennmittel,

und

B    Di- oder Polyisocyanaten,

wobei die füllstoffhaltigen Polyole gemäß Komponente A1 in Mengen eingesetzt werden, so dass der Füllstoffgehalt resultierend aus der Komponente A1 bezogen auf die Gesamtmenge der Komponenten A1, A2 und A3 2 bis 30 Gew.-% Füllstoff beträgt und wobei die Umsetzung bei einer Kennzahl von 70 bis 120, bevorzugt 90 bis 110 erfolgt.

Ein weiterer Gegenstand der vorliegenden Erfindung sind die mittels des erfindungsgemäßen Verfahrens erhältlichen thermischen und akustischen Isolierungen für Verbrennungsmotoren.

Die Herstellung von Schaumstoffen auf Isocyanatbasis ist an sich bekannt und z.B. in DE-A 1 694 142, DE-A 1 694 215 und DE-A 1 720 768 sowie im Kunststoff-Handbuch Band VII, Polyurethane, herausgegeben von Vieweg und Höchtlein, Carl Hanser Verlag München 1966, sowie in der Neuauflage dieses Buches, herausgegeben von G. Oertel, Carl Hanser Verlag München, Wien 1993, beschrieben.

Für die Herstellung der erfindungsgemäß zu verwendenden Polyurethanschaumstoffe können die nachfolgend näher beschriebenen Komponenten eingesetzt werden.

Komponente A1

Bei Komponente A1 handelt es sich um füllstoffhaltige Polyole, wobei der Füllstoff ein Reaktionsprodukt aus Di- und oder Polyisocyanaten mit gegenüber Isocyanaten reaktionsfähigen Wasserstoffatomen aufweisenden Verbindungen ist.

Füllstoffhaltige Polyole mit einem Füllstoffaufbau aus Polyharnstoffdispersionen (PHD) werden kurz PHD-Polyole genannt (Komponente A1.1).

Vorzugsweise handelt es sich um füllstoffhaltige Polyole mit einem Füllstoffaufbau aus

A1.1.1    Polyharnstoffdispersionen, die durch Umsetzung von Di- und/oder Polyisocyanaten mit primären und/oder sekundären Aminogruppen aufweisenden Di- und/oder Polyaminen und/oder Hydrazinen in einer Polyolkomponente erhältlich sind.

Die PHD-Polyole werden beispielsweise hergestellt durch in situ Polymerisation von Di- und/oder Polyisocyanaten mit primären und/oder sekundären Aminogruppen aufweisenden Di- und/oder Polyaminen und/oder Hydrazinen in einer 1 bis 8 primäre und/oder sekundäre Hydroxylgruppen aufweisenden Verbindung mit einem Molekulargewicht von 400 bis 18000 g/mol.

Füllstoffhaltigen Polyole mit einem Füllstoffaufbau erhältlich durch Umsetzung von Alkanolaminen mit Di- und/oder Polyisocyanaten werden kurz PIPA-Polyole (Komponente A1.2) genannt. Vorzugsweise handelt es sich um füllstoffhaltige Polyole mit einem Füllstoffaufbau aus

A1.2.1      Urethangruppen enthaltenden Dispersionen, die durch durch Umsetzung von Alka-nolaminen mit Di- und/oder Polyisocyanaten in einer Polyolkomponente erhältlich sind, besonders bevorzugt in einer 1 bis 8 primäre und/oder sekundäre Hydroxylgruppen aufweisenden Polyolkomponente mit einem Molekulargewicht von 400 bis 18000 g/mol.

PIPA-Polyole sind in GB 2 072 204 A, DE 31 03 757 A1 und US 4 374 209 A eingehend beschrieben.

Bevorzugte bei der Herstellung der füllstoffhaltigen Polyole A1.1 bzw. A1.2 eingesetzte Hydroxylgruppen aufweisende Verbindungen sind 2 bis 8 Hydroxylgruppen aufweisende Verbindungen, speziell solche vom Molekulargewicht 1000 bis 6000 g/mol, vorzugsweise 2000 bis 6000 g/mol, z.B. mindestens 2, in der Regel 2 bis 8, vorzugsweise aber 2 bis 6 Hydroxylgruppen aufweisende Polyetherpolyole und Polyesterpolyole sowie Polycarbonatpolyole, Polyethercarbonatpolyole und Polyesteramidpolyolen, wie sie für die Herstellung von homogenen und von zellförmigen Polyurethanen an sich bekannt sind und wie sie z.B. in der EP-A 0 007 502, Seiten 8 bis 15, beschrieben werden. Bevorzugt sind Hydroxylgruppen aufweisende, besonders bevorzugt mindestens zwei Hydroxylgruppen aufweisende Polyetherpolyole. Vorzugsweise werden die Polyetherpolyole hergestellt durch Addition von Alkylenoxiden (wie beispielsweise Ethylenoxid, Propylenoxid und Butylenoxid oder deren Mischungen) an Startern wie Ethylenglykol, Propylenglykol, Glycerin, Trimethylolpropan, Pentaerythrit, Sorbit, Mannit und/oder Sucrose, so daß eine Funktionalität zwischen 2 und 8, vorzugsweise zwischen 2,5 und 6, besonders bevorzugt zwischen 2,5 und 4 eingestellt werden kann.

Vorzugsweise werden als Komponente A1.1 PHD-Polyole verwendet, die durch Umsetzung einer Diisocyanat-Mischung aus 75 bis 85 Gew.-% 2,4-Toluylendiisocyanat (2,4-TDI) und 15 bis 25 Gew.-% 2,6-Toluylendiisocyanat (2,6-TDI) mit einem Diamin und/oder Hydrazin in einer Polyolkomponente, vorzugsweise einem Polyetherpolyol, hergestellt durch Alkoxylierung eines trifunktionellen Starters (wie beispielsweise Glycerin und/oder Trimethylolpropan), erhältlich sind. Verfahren zur Herstellung von PHD-Polyole sind beispielsweise beschrieben in US 4,089,835 und US 4,260,530.

Bevorzugt wird als Komponente A1 ausschließlich Komponente A1.1 oder A1.2 eingesetzt, besonders bevorzugt ausschließlich Komponente A1.1.

Die Komponenten A1.1 und A1.2 können in einer anderen Ausführungsform der Erfindung in Mischung eingesetzt werden, bevorzugt wird eine Mischung der Komponenten A1.1 und A1.2 in einem Gewichtsverhältnis A1.1 : A1.2 von 30 : 70 bis 70 : 30 eingesetzt.

Die gefüllten Polyole gemäß Komponente A1 werden in Mengen eingesetzt, dass der Füllstoffgehalt resultierend aus der Komponente A1 bezogen auf die Gesamtmenge der Komponenten A1, A2 und A3 bevorzugt 2 bis 30 Gew.-%, besonders bevorzugt 4 bis 25 Gew.-%, höchst bevorzugt 7 bis 22 Gew.-% Füllstoff beträgt.

Bevorzugt werden als gefüllte Polyole gemäß Komponente A1 ausschließlich PHD-Polyole (Komponente A1.1) in Mengen eingesetzt, dass der Füllstoffgehalt resultierend aus der Komponente A1.1 bezogen auf die Gesamtmenge der Komponenten A1.1, A2 und A3 bevorzugt 2 bis 30 Gew.-%, besonders bevorzugt 4 bis 25 Gew.-%, höchst bevorzugt 7 bis 22 Gew.-% Füllstoff beträgt.

Besonders bevorzugt werden PHD-Polyole (Komponente A1.1) mit einem PHD-Füllstoffanteil von 2 bis 25 Gew.-%, höchst bevorzugt 8 bis 22 Gew.-% eingesetzt. Beispielsweise resultiert im Falle eines PHD-Füllstoffanteils von 20 Gew.-% der Komponente A1.1 und einem Mengenverhältnis von 75 Gew.-Teilen A1.1. und 25 Gew.-Teilen A3 ein Füllstoffgehalt von 15 Gew.-%, bezogen auf die Gesamtmenge der Komponenten A1.1 und A3 (ohne Einsatz der Komponente A2).

### Komponente A2

Als Komponente A2 kommen gefüllte Polyole mit einem Füllstoffaufbau aus Dispersionen, die durch Pfropfung von olefinisch ungesättigten Monomeren (beispielsweise Styrol und/oder Acrylnitril) an ein Polyol erhalten werden (SAN-Polyole). Bezüglich der zu verwendenden und bevorzugt zu verwendenden Polyole wird auf die Ausführungen zu den Polyolen unter A1 verwiesen. Diese gelten hier analog.

Die gefüllten Polyole gemäß Komponente A2 werden in Mengen eingesetzt, dass der Füllstoffgehalt resultierend aus der Komponente A2, bezogen auf die Gesamtmenge der Komponenten A1, A2 und A3 $\leq$ 10 Gew.-%, vorzugsweise $\leq$ 5 Gew.-%, besonders bevorzugt $\leq$ 2 Gew.-% Füllstoff beträgt.

In einer bevorzugten Ausführungsform werden im erfindungsgemäßen Verfahren keine SAN-Polyole (Komponente A2) eingesetzt.

Komponente A3

Bei Komponente A3 handelt es sich um Verbindungen mit mindestens zwei gegenüber Isocyanten reaktionsfähigen Wasserstoffatomen mit einem Molekulargewicht in der Regel von 400 - 18000 g/mol. Hierunter versteht man neben Aminogruppen, Thiogruppen oder Carboxylgruppen aufweisende Verbindungen, vorzugsweise Hydroxylgruppen aufweisende Verbindungen, insbesondere 2 bis 8 Hydroxylgruppen aufweisende Verbindungen speziell solche vom Molekulargewicht 1000 bis 6000, vorzugsweise 2000 bis 6000, z.B. mindestens 2, in der Regel 2 bis 8, vorzugsweise aber 2 bis 6, Hydroxylgruppen aufweisende Polyether und Polyester sowie Polycarbonate und Polyesteramide, wie sie für die Herstellung von homogenen und von zellförmigen Polyurethanen an sich bekannt sind und wie sie z.B. in der EP-A 0 007 502, Seiten 8 - 15, beschrieben werden. Die mindestens zwei Hydroxylgruppen aufweisenden Polyetherpolyole sind erfindungsgemäß bevorzugt. Vorzugsweise werden die Polyetherpolyole hergestellt durch Addition von Alkylenoxiden (wie beispielsweise Ethylenoxid,Propylenoxid und Butylenoxid oder deren Mischungen) an Startern wie Ethylenglykol, Propylenglykol, Glycerin, Trimethylolpropan, Pentaerythrit, Sorbit, Mannit und/oder Sucrose, so daß eine Funktionalität zwischen 2 und 8, vorzugsweise zwischen 2,5 und 6, besonders bevorzugt zwischen 2,5 und 4 eingestellt werden kann.

In einer bevorzugten Ausführungsform werden die Komponenten A1 (enthaltend A1.1 und/oder A1.2) und A3 in einem Gewichtsverhältnis von A1 : A3 = 100 : 0 bis 10 : 90, besonders bevorzugt in einem Gewichtsverhältnis von A1 : A3 = 70 : 30 bis 30 : 70 eingesetzt werden.

Höchst bevorzugt werden m erfindungsgemäßen Verfahren keine Verbindungen gemäß Komponente A3 eingesetzt.

Komponente A4

Gegebenenfalls werden als Komponente A4 Verbindungen mit mindestens zwei gegenüber Isocyanaten reaktionsfähigen Wasserstoffatomen und einem Molekulargewicht von 32 bis 399 eingesetzt. Hierunter sind Hydroxylgruppen und/oder Aminogruppen und/oder Thiolgruppen und/oder Carboxylgruppen aufweisende Verbindungen zu verstehen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispielsweise können als Komponente A2 Ethanolamin, Diethanolamin, Triethanolamin, Sorbit und/oder Glycerin eingesetzt werden. Weitere Beispiele für Verbindungen gemäß Komponente A4 werden in EP-A 0 007 502, Seiten 16 - 17, beschrieben.

Komponente A5

Als Komponente A5 werden Wasser und/oder physikalische Treibmittel eingesetzt. Als physikalische Treibmittel werden beispielsweise Kohlendioxid und/oder leicht flüchtige organische Substanzen wie z. B. Dichlormethan als Treibmittel eingesetzt.

Komponente A6

Als Flammschutzmittel können beispielsweise Phosphate oder Phosphonate, wie z.B. Diethylethanphosphonat (DEEP), Triethylphosphat (TEP) und Dimethylpropylphosphonat (DMPP), eingesetzt werden. Weitere geeignete Flammschutzmittel sind beispielsweise bromierte Ester, bromierte Ether (Ixol) oder bromierte Alkohole wie Dibromneopentylakohol, Tribromneopentylalkohol, Tetrabromphthalat Diol (DP 54) und PHT-4-Diol, sowie chlorierte Phosphate wie Tris(2-chlorethyl)phosphat, Tris-(2-chlorpropyl)phosphat (TCPP), Tris(1,3-dichlorpropyl)phosphat, Trikresylphosphat, Diphenylkresylphosphat (DPK), Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole.

In einer bevorzugten Ausführungsform werden keine Verbindungen der Komponente A6 bei der Herstellung der Polyurethane verwendet.

Unter die Flammschutzmittel der Komponente A6 sind im erfindungsgemäßen Sinne nicht die füllstoffhaltigen Polyole gemäß Komponente A1 zu verstehen.

Komponente A7

Als Komponente A7 werden gegebenenfalls Hilfs- und Zusatzstoffe (ausgenommen Komponente A6) verwendet wie

a) Katalysatoren (Aktivatoren),

b) oberflächenaktive Zusatzstoffe (Tenside), wie Emulgatoren und Schaumstabilisatoren,

c) ein oder mehrere Additive ausgewählt aus der Gruppe bestehend aus Reaktionsverzögerern (z.B. sauer reagierende Stoffe wie Salzsäure oder organische Säurehalogenide), Zellreglern (wie beispielsweise Paraffine oder Fettalkohole oder Dimethylpolysiloxane), Pigmenten, Farbstoffen, Stabilisatoren gegen Alterungs- und Witterungseinflüsse, Weichmachern, fungistatisch und bakteriostatisch wirkende Substanzen, Füllstoffen (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffe sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

Als Katalysatoren werden bevorzugt eingesetzt: aliphatische tertiäre Amine (beispielsweise Trimethylamin, Tetramethylbutandiamin, 3-Dimethylaminopropylamin, N,N-Bis(3-dimethylaminopropyl)-N-isopropanolamin), cycloaliphatische tertiäre Amine (beispielsweise 1,4-Diaza(2,2,2)bicyclooctan), aliphatische Aminoether (beispielsweise Bisdimethylaminoethylether, 2-(2-Dimethylaminoethoxy)ethanol und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff und Derivate des Harnstoffs (wie beispielsweise Aminoalkylharnstoffe, siehe zum Beispiel EP-A 0 176 013, insbesondere (3-Dimethylaminopropylamin)-harnstoff).

Als Katalysatoren können auch Zinn(II)-Salze von Carbonsäuren eingesetzt werden, wobei vorzugsweise die jeweils zugrundeliegende Carbonsäure von 2 bis 20 Kohlenstoffatome aufweist. Besonders bevorzugt sind das Zinn(II)-Salz der 2-Ethylhexansäure (d.h. Zinn(II)-(2-ethylhexanoat)), das Zinn(II)-Salz der 2-Butyloctansäure, das Zinn(II)-Salz der 2-Hexyldecansäure, das Zinn(II)-Salz der Neodecansäure, das Zinn(II)-Salz der Ölsäure, das Zinn(II)-Salz der Ricinolsäure und Zinn(II)laurat. Es können auuch Zinn(IV)-Verbindungen, wie z.B. Dibutylzinnoxid, Dibutylzinndichlorid, Dibutylzinndiacetat, Dibutylzinndilaurat, Dibutylzinnmaleat oder Dioctylzinndiacetat als Katalysatoren eingesetzt werden.

Selbstverständlich können alle oben genannten Katalysatoren als Gemische eingesetzt werden.

Komponente B

Als Komponente B werden aliphatische, cycloaliphatische, araliphatische, aromatische und heterocyclische Polyisocyanate eingesetzt, wie sie z.B. von W. Siefken in Justus Liebigs Annalen der Chemie, 562, Seiten 75 bis 136, beschrieben werden, beispielsweise solche der Formel (I)

$$Q(NCO)_n \qquad (I)$$

in der

n = 2 - 4, vorzugsweise 2 -3,

und

Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen

bedeuten.

Beispielsweise handelt es sich um solche Polyisocyanate, wie sie in der EP-A 0 007 502, Seiten 7 - 8, beschrieben werden. Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise wird als Komponente B mindestens eine Verbindung ausgewählt aus der Gruppe bestehend aus 4,4'- und 2,4'- und 2,2'-Diphenylmethandiisocyanat und Polyphenylpolymethylenpolyisocyanat ("Mehrkern-MDI") eingesetzt.

Besonders bevorzugt wird als Komponente B eine Diphenylmethandiisocyanat-Mischung eingesetzt, bestehend aus

a) 35 bis 95 Gew.-% 4,4'-Diphenylmethandiisocyanat und

b) 5 bis 65 Gew.-% 2,2'-Diphenylmethandiisocyanat und/oder 2,4'-Diphenylmethandiisocyanat und

c) 0 bis 56 Gew.-%, bevorzugt 0 bis 52 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

Ganz besonders bevorzugt wird als Komponente B eine Diphenylmethandiisocyanat-Mischung eingesetzt, bestehend aus

a) 40 bis 42 Gew.-% 4,4'-Diphenylmethandiisocyanat und

b) 6 bis 9 Gew.-% 2,2'-Diphenylmethandiisocyanat und/oder 2,4'-Diphenylmethandiiso-cyanat und

c) 50 bis 52 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

Zur Herstellung der Polyurethanschaumstoffe werden die Reaktionskomponenten nach dem an sich bekannten Einstufenverfahren, dem Prepolymerverfahren oder dem Semiprepolymerverfahren zur Umsetzung gebracht, wobei man sich vorzugsweise maschineller Einrichtungen bedient wie sie in US 2 764 565 beschrieben werden. Einzelheiten über Verarbeitungseinrichtungen, die auch erfindungsgemäß infrage kommen, werden im Vieweg und Höchtlen (Hrsg.): Kunststoff-Handbuch, Band VII, Carl-Hanser-Verlag, München 1966, S. 121 bis 205 beschrieben.

In einer bevorzugten Ausführungsform werden die Komponenten A1 bis A7 und B in einem Einstufenverfahren zur Reaktion gebracht.

In einer alternativen bevorzugten Ausführungsform wird zunächst aus der Polyolkomponente A3 und der Isocyanatkomponente B ein Prepolymer gebildet, welches dann mit den übrigen Reaktanden umgesetzt wird.

Die Kennzahl (Isocyanat Index) gibt das Verhältnis der tatsächlich eingesetzten Isocyanat-Menge zur stöchiometrischen, d.h. berechneten Isocyanat-Gruppen (NCO)-Menge an:

$$\text{Kennzahl} = [(\text{Isocyanat-Menge eingesetzt}) : (\text{Isocyanat-Menge berechnet})] \bullet 100 \qquad (\text{II})$$

Vorzugsweise werden die Polyurethanschaumstoffen mit einer Rohdichte (auch als Raumgewicht bezeichnet) von 80 kg m$^{-3}$ bis 300 kg m$^{-3}$, besonders bevorzugt von 100 kg m$^{-3}$ bis 250 kg m$^{-3}$ hergestellt.

Die Polyurethanschäume werden erfindungsgemäß zur thermischen und akustischen Isolierung für Verbrennungsmotoren, gegebenenfalls einschließlich der Nebenaggregate, eingesetzt. Es ist hierbei möglich, den Motor ganz oder teilweise sowie nur den Motor oder den Motor gemeinsam mit den Nebenaggregaten zu isolieren.

In einer bevorzugten Ausführungsform der Erfindung kann die erfindungsgemäße thermische und akustische Isolierung stoffschlüssig mit dem Motorblock verbunden sein. Das kann beispielsweise durch direktes Anschäumen des Polyurethanhartschaums an das Motorgehäuse geschehen. Dabei kann entweder nur das Motorgehäuse oder aber auch das Motorgehäuse und die Zusatzaggregate umschäumt werden. Der Vorteil dieser Ausführungsform liegt in einer vollständigen Abdichtung des Motorgehäuses, was zu einer sehr guten Wärme- und insbesondere Schallisolierung führt. Außerdem ist dieses Verfahren sehr leicht durchführbar, da nur die flüssigen Schaumkomponenten auf die Motoroberfläche aufgebracht werden müssen und keine separate Formgebung und Anpassung der Isolierung erfolgen muß. Nachteilig ist jedoch, daß bei Arbeiten am Motor die Isolierung entfernt werden muß, was in jedem Fall mit ihrer Zerstörung verbunden ist.

Eine weitere Möglichkeit der stoffschlüssigen Isolierung der Motoren kann darin bestehen, dass man die Isolierung in einem Stück oder in mehreren Teilen herstellt, vorzugsweise als Formkörper, und diese dann mit dem Motorgehäuse verklebt. Auch dabei kann einer vollständigen Abdichtung des Motorgehäuses mit den oben erwähnten Vorteilen erreicht werden. Nachteilig ist, daß zunächst die Formkörper hergestellt und diese danach in einern separaten Arbeitsschritt mit dem Motorgehäuse verbunden werden müssen. Gegenüber dem direkten Anschäumen hat dieses Verfahren den Vorteil, daß bei Arbeiten am Motor die Isolierung gegebenenfalls durch lösen der Verklebung entfernt und anschließend wieder aufgebracht werden kann.

In einer weiteren bevorzugten Ausführungsform der Erfindung kann die Isolierung als selbsttragende Einheit gestaltet werden. Dabei können Formteile aus Polyurethanschaum hergestellt und diese um den Motor angebracht werden. Auch hier ist es wiederum möglich, die Isolierung als ein Teil oder in Form von mehreren Teilen auszugestalten. Außerdem kann wiederum nur der Motor ganz oder teilweise oder der Motor einschließlich der Nebenaggregate umhüllt werden. Der Vorteil dieser Ausführungsform liegt in der einfachen Demontage der Isolierung bei Wartungs- oder Reparaturarbeiten am Motor und der möglichen Wiederverwendung der Isolierung. Nachteilig gegenüber der direkten Verschäumung des Motors ist der höhere Aufwand bei der Herstellung und Anbringung der Isolierung. Außerdem kann es beim Betrieb des Motors zu einer Lockerung der Isolierung und damit zu einer möglichen Verschlechterung der Wärme- und Geräuschdämmung

des Motors kommen. Besonders vorteilhaft ist auch hier die Ausgestaltung der Isolierung aus mehreren Einzelteilen, um Reparatur und Wartungsarbeiten am Motor zu vereinfachen.

Selbstveständlich können in den beiden letztgenannten Ausführungsformen die Isolierung, bzw. die einzelnen Teile der Isolierung statt als Formkörper auch als Blockschaum hergestellt werden, der dann in die entsprechende Form geschnitten wird.

In einer weiteren Ausführungsform der Erfindung können die selbsttragenden Einheiten auch als Verbundelemente ausgestaltet sein.

So ist es möglich, die dem Motor abgewandte Seite mit einer stabilen Schale aus Kunststoff zu versehen, um die mechanische Festigkeit der Isolierung zu verbessern. Als Kunststoffe zur Herstellung dieser Schale können beispielsweise Polyolefine, Polystyrol, Polyamid oder Polycarbonate verwendet werden. Es ist jedoch auch möglich und im Interesse der Recyclingfähigkeit vorteilhaft, kompakte Polyurethane, beispielsweise PU-RIM, zur Herstellung dieser Schale einzusetzen. Die zur Herstellung der Schale eingesetzten Kunststoffe können auch Verstärkungsmittel, beispielsweise Glasfasern, enthalten.

Die dem Motor zugewandte Seite kann eine Schicht aus mindestens einem temperaturstabilen Material enthalten. Dabei können anorganische Stoffe, beispielsweise Mineralfasern, ebenso verwendet werden wie organische Materialien, insbesondere Schaumstoffe, wie zum Beispiel Melamin-Formaldehydschaum. Es ist auch möglich, Verbundelemente aus mehreren Polyurethanschäumen einzusetzen, wobei sich der für die dem Motor abgewandte Seite verwendete Polyurethanschaurn durch besondere mechanische Festigkeit und der für die dem Motor zugewandte Seite verwendete Polyurethanschaum durch besondere thermische Stabilität auszeichnen sollte.

Die Verbundelemente können auch mindestens eine Schicht enthalten, die der Körperschalldämmung dient. Beispiele hierfür sind Polyurethane mit speziellen Füllstoffen, beispielsweise Schwerspat. Nach Möglichkeit werden diese Schichten in der Mitte oder an der dem Motor abgewandten Seite des Verbundelementes angebracht, da sie zumeist nicht temperaturbeständig sind. In diesem Fall ist es bevorzugt, wenn die äußere Kunststoffschale eine Dicke von 0,5 bis 5,0 mm, die Schicht zur Wärmedämmung eine mittlere Dicke von 5,0 bis 70 mm und die Schicht zur Körperschalldämmung eine Dicke von 0,5 bis 10 mm aufweist.

Zum Schutz gegen aggressive Flüssigkeiten, wie Kraftstoff, Motorenöl, Bremsflüssigkeit oder Frostschutzmittel, kann die Innenseite der isolierung auch noch mit einer Metallschicht umgeben sein, beispielsweise mit einer dünnen Aluminiumschicht. Dies führt darüber hinaus noch zu einer zusätzlichen Reflexion der Wärmestrahlung. Außerdem kann die äußere Oberfläche noch dekorativ gestaltet werden.

In einer ersten Ausführungsform betrifft die Erfindung ein Verfahren zur Herstellung einer thermischen und akustischen Isolierung für Verbrennungsmotoren unter Verwendung von Polyurethanschaumstoffen, die erhältlich sind durch Umsetzung von Di-und/oder Polyisocyanaten mit füllstoffhaltigen Polyolen, wobei der Füllstoff ein Reaktionsprodukt aus Di- und oder Polyisocyanaten mit gegenüber Isocyanaten reaktionsfähigen Wasserstoffatomen aufweisenden Verbindungen ist, in Gegenwart von Wasser und/oder physikalischen Treibmitteln.

In einer zweiten Ausführungsform betrifft die Erfindung ein Verfahren gemäß Ausführungsform 1, wobei die Polyurethanschaumstoffe erhältlich sind durch Umsetzung von

A1    füllstoffhaltigen Polyolen, wobei der Füllstoff ein Reaktionsprodukt aus Di- und oder Polyisocyanaten mit gegenüber Isocyanaten reaktionsfähigen Wasserstoffatomen aufweisenden Verbindungen ist,

A2    gegebenenfalls weiteren füllstoffhaltigen Polyolen, die nicht unter die Definition der Komponente A1 fallen,

A3    gegebenenfalls gegenüber Isocyanaten reaktionsfähige Wasserstoffatome aufweisende Verbindungen mit einem Molekulargewicht von 400 - 18000 g/mol, die nicht unter die Definition der Komponente A1 oder A2 fallen,

A4    gegebenenfalls gegenüber Isocyanaten reaktionsfähige Wasserstoffatome aufweisenden Verbindungen mit einem Molekulargewicht von 62 - 399 g/mol, die Definition der Komponente A1 oder A2 fallen,

A5    Wasser und/oder physikalische Treibmittel,

A6    gegebenenfalls Flammschutzmittel,

A7    gegebenenfalls Hilfs- und Zusatzstoffen wie

a) Katalysatoren,

b) oberflächenaktive Zusatzstoffe,

c) ein oder mehrere Additiven ausgewählt aus der Gruppe bestehend aus Reaktionsverzögerern, Zellreglern, Pigmenten, Farbstoffen, Stabilisatoren gegen Alterungs- und Witterungseinflüsse, Weichmacher, fungistatisch und bakteriostatisch wirkende Substanzen, Füllstoffe und Trennmittel,

und

B Di- oder Polyisocyanaten,

wobei die füllstoffhaltigen Polyole gemäß Komponente A1 in Mengen eingesetzt werden, dass der Füllstoffgehalt resultierend aus der Komponente A1 bezogen auf die Gesamtmenge der Komponenten A1, A2 und A3 2 bis 30 Gew.-% Füllstoff beträgt.

In einer dritten Ausführungsform betrifft die Erfindung ein Verfahren gemäß Ausführungsform 1 oder 2, wobei die Polyurethanschaumstoffe erhältlich sind durch Umsetzung von

100 Gewichtsteilen (Gew.-Teile) einer Komponente bestehend aus A1, A2 und A3 mit der folgenden Zusammensetzung:

A1 füllstoffhaltige Polyole, wobei der Füllstoff ein Reaktionsprodukt aus Di- und oder Polyisocyanaten mit gegenüber Isocyanaten reaktionsfähigen Wasserstoffatomen aufweisenden Verbindungen ist,

A2 gegebenenfalls weitere füllstoffhaltige Polyole, die nicht unter die Definition der Komponente A1 fallen,

A3 gegebenenfalls gegenüber Isocyanaten reaktionsfähige Wasserstoffatome aufweisende Verbindungen mit einem Molekulargewicht von 400 - 18000 g/mol, die nicht unter die Definition der Komponente A1 oder A2 fallen,

A4 0 bis 10 Gew.-Teilen (bezogen auf 100 Gew.-Teile der Summe der Gewichtsteile der Komponenten A1 bis A3) gegenüber Isocyanaten reaktionsfähige Wasserstoffatome aufweisende Verbindungen mit einem Molekulargewicht von 62 - 399 g/mol, die nicht unter die Definition der Komponente A1 oder A2 fallen,

A5 0,1 bis 10 Gew.-Teilen (bezogen auf 100 Gew.-Teile der Summe der Gewichtsteile der Komponenten A1 bis A3) Wasser und/oder physikalische Treibmittel,

A6 0 bis 20 Gew.-Teilen (bezogen auf 100 Gew.-Teile der Summe der Gewichtsteile der Komponenten A1 bis A3) Flammschutzmittel,

A7 0 bis 20 Gew.-Teilen (bezogen auf 100 Gew.-Teile der Summe der Gewichtsteile der Komponenten A1 bis A3) Hilfs- und Zusatzstoffen wie

    a) Katalysatoren,
    b) oberflächenaktive Zusatzstoffe,
    c) ein oder mehrere Additiven ausgewählt aus der Gruppe bestehend aus Reaktionsverzögerer, Zellregler, Pigmente, Farbstoffe, Stabilisatoren gegen Alterungs- und Witterungseinflüsse, Weichmacher, fungistatisch und bakteriostatisch wirkende Substanzen, Füllstoffe und Trennmittel,

und

B Di- oder Polyisocyanaten,

wobei die füllstoffhaltigen Polyole gemäß Komponente A1 in Mengen eingesetzt werden, so dass der Füllstoffgehalt resultierend aus der Komponente A1 bezogen auf die Gesamtmenge der Komponenten A1, A2 und A3 2 bis 30 Gew.-% Füllstoff beträgt und wobei die Umsetzung bei einer Kennzahl von 70 bis 120, bevorzugt 90 bis 110 erfolgt.

In einer vierten Ausführungsform betrifft die Erfindung ein Verfahren gemäß Ausführungsform 2 oder 3, wobei die füllstoffhaltigen Polyole gemäß Komponente A1 in Mengen eingesetzt werden, dass der Füllstoffgehalt resultierend aus der Komponente A1 bezogen auf die Gesamtmenge der Komponenten A1, A2 und A3 4 bis 25 Gew.-% Füllstoff beträgt.

In einer fünften Ausführungsform betrifft die Erfindung ein Verfahren gemäß Ausführungsform 2 oder 3, wobei die füllstoffhaltigen Polyole gemäß Komponente A1 in Mengen eingesetzt werden, dass der Füllstoffgehalt resultierend aus der Komponente A1 bezogen auf die Gesamtmenge der Komponenten A1, A2 und A3 7 bis 22 Gew.-% Füllstoff beträgt.

In einer sechsten Ausführungsform betrifft die Erfindung ein Verfahren gemäß einer der Ausführungsformen 2 bis 5, wobei es sich bei Komponente A1 um

A1.1 füllstoffhaltige Polyole, mit einem Füllstoffaufbau aus
    A1.1.1 Polyharnstoffdispersionen, die durch Umsetzung von Di- und/oder Polyisocyanaten mit primären und/oder sekundären Aminogruppen aufweisenden Di- und/oder Polyaminen und/oder Hydrazinen in einer Polyolkomponente erhältlich sind (PHD-Polyole A1.1),

und/oder

A1.2 füllstoffhaltige Polyole, mit einem Füllstoffaufbau aus
    A1.2.1 Urethangruppen enthaltenden Dispersionen, die durch durch Umsetzung von Alkanolaminen mit Di- und/oder Polyisocyanaten in einer Polyolkomponente erhältlich sind,

handelt.

In einer siebten Ausführungsform betrifft die Erfindung ein Verfahren gemäß Ausführungsform 6, wobei die Komponenten A1.1 und A 1.2 in Mischung eingesetzt werden.

In einer achten Ausführungsform betrifft die Erfindung ein Verfahren gemäß Ausführungsform 6 oder 7, wobei die Komponenten A1.1 und A 1.2 in einem Gewichtsverhältnis von A1.1 :A 1.2 entsprechend ≥ 30 : 70 bis ≤ 70 : 30 eingesetzt werden.

In einer neunten Ausführungsform betrifft die Erfindung ein Verfahren gemäß Ausführungsform 6, wobei als Komponente A1 ausschließlich Komponente A1.1 eingesetzt wird.

In einer zehnten Ausführungsform betrifft die Erfindung ein Verfahren gemäß Ausführungsform 6, wobei als Komponente A1 ausschließlich Komponente A1.2 eingesetzt wird.

In einer elften Ausführungsform betrifft die Erfindung ein Verfahren gemäß einer der Ausführungsformen 2 bis 10, wobei zur Herstellung der füllstoffhaltigen Polyole A1, bzw. A1.1 und A1.2 1 bis 8 primäre und/oder sekundäre Hydroxylgruppen aufweisende Verbindungen mit einem Molekulargewicht von 400 bis 18000 g/mol verwendet werden.

In einer zwölften Ausführungsform betrifft die Erfindung ein Verfahren gemäß einer der Ausführungsformen 2 bis 11,

wobei zur Herstellung der füllstoffhaltigen Polyole A1, bzw. A1.1 und A1.2 Polyetherpolyole verwendet werden.

In einer dreizehnten Ausführungsform betrifft die Erfindung ein Verfahren gemäß einer der Ausführungsformen 2 bis 12, wobei keine Verbindungen gemäß Komponente A2 enthalten sind.

In einer vierzehnten Ausführungsform betrifft die Erfindung ein Verfahren gemäß einer der Ausführungsformen 2 bis 13, wobei die gefüllten Polyole gemäß Komponente A2 in Mengen eingesetzt werden, dass der Füllstoffgehalt resultierend aus der Komponente A2, bezogen auf die Gesamtmenge der Komponenten A1, A2 und A3 ≤ 10 Gew.-% Füllstoff beträgt.

In einer fünfzehnten Ausführungsform betrifft die Erfindung ein Verfahren gemäß einer der Ausführungsformen 2 bis 13, wobei die gefüllten Polyole gemäß Komponente A2 in Mengen eingesetzt werden, dass der Füllstoffgehalt resultierend aus der Komponente A2, bezogen auf die Gesamtmenge der Komponenten A1, A2 und A3 ≤ 5 Gew.-% Füllstoff beträgt.,

In einer sechzehnten Ausführungsform betrifft die Erfindung ein Verfahren gemäß einer der Ausführungsformen 2 bis 13, wobei die gefüllten Polyole gemäß Komponente A2 in Mengen eingesetzt werden, dass der Füllstoffgehalt resultierend aus der Komponente A2, bezogen auf die Gesamtmenge der Komponenten A1, A2 und A3 ≤ 2 Gew.-% Füllstoff beträgt.

In einer siebzehnten Ausführungsform betrifft die Erfindung ein Verfahren gemäß einer der Ausführungsformen 2 bis 16, wobei die Komponenten A1 (enthaltend A1.1 und/oder A1.2) und A3 in einem Gewichtsverhältnis von A1 : A3 = 100 : 0 bis 10 : 90 eingesetzt werden.

In einer achtzehnten Ausführungsform betrifft die Erfindung ein Verfahren gemäß einer der Ausführungsformen 2 bis 16, wobei die Komponenten A1 (enthaltend A1.1 und/oder A1.2) und A3 in einem Gewichtsverhältnis von A1 : A3 = 70 : 30 bis 30 : 70 eingesetzt werden.

In einer neunzehnten Ausführungsform betrifft die Erfindung ein Verfahren gemäß einer der Ausführungsformen 2 bis 17, wobei keine Verbindungen gemäß Komponente A3 eingesetzt werden.

In einer zwanzigsten Ausführungsform betrifft die Erfindung ein Verfahren gemäß einer der Ausführungsformen 2 bis 19, wobei keine Verbindungen gemäß Komponente A6 eingesetzt werden.

In einer einundzwanzigsten Ausführungsform betrifft die Erfindung ein Verfahren gemäß einer der Ausführungsformen 2 bis 20, wobei als Komponente B mindestens eine Verbindung ausgewählt aus der Gruppe bestehend aus 4,4'- und 2,4'- und 2,2'-Diphenylmethandiisocyanat und Polyphenylpolymethylenpolyisocyanat ("Mehrkern-MDI") eingesetzt wird.

In einer zweiundzwanzigsten Ausführungsform betrifft die Erfindung ein Verfahren gemäß einer der Ausführungsformen 2 bis 20,

wobei als Komponente B eine Diphenylmethandiisocyanat-Mischung eingesetzt wird, bestehend aus

    a) 35 bis 95 Gew.-% 4,4'-Diphenylmethandiisocyanat und
    b) 5 bis 65 Gew.-% 2,2'-Diphenylmethandiisocyanat und/oder 2,4'-Diphenylmethandiisocyanat und
    c) 0 bis 56 Gew.-%, bevorzugt 0 bis 52 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

In einer dreiundzwanzigsten Ausführungsform betrifft die Erfindung ein Verfahren gemäß einer der Ausführungsformen 2 bis 20,

wobei als Komponente B eine Diphenylmethandiisocyanat-Mischung eingesetzt, bestehend aus

    a) 40 bis 42 Gew.-% 4,4'-Diphenylmethandiisocyanat und
    b) 6 bis 9 Gew.-% 2,2'-Diphenylmethandiisocyanat und/oder 2,4'-Diphenylmethandiiso-cyanat und

c) 50 bis 52 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

In einer vierundzwanzigsten Ausführungsform betrifft die Erfindung ein Verfahren gemäß einer der Ausführungsformen 2 bis 24, wobei die Polyurethanschaumstoffe eine Rohdichte von 80 bis 300 kg/m$^3$ aufweisen.

In einer fünfundzwanzigsten Ausführungsform betrifft die Erfindung ein Verfahren gemäß einer der Ausführungsformen 2 bis 24, wobei die Polyurethanschaumstoffe eine Rohdichte von 100 bis 250 kg/m$^3$ aufweisen.

In einer sechsundzwanzigsten Ausführungsform betrifft die Erfindung ein Verfahren gemäß einer der Ausführungsformen 2 bis 25, wobei bei der Herstellung der Polyurethanschäume die Komponenten A1 bis A7 und B in einem Einstufenverfahren zur Reaktion gebracht werden.

In einer siebenundzwanzigsten Ausführungsform betrifft die Erfindung ein Verfahren gemäß einer der Ausführungsformen 2 bis 25, wobei bei der Herstellung der Polyurethanschäume zunächst aus der Polyolkomponente A3 und der Isocyanatkomponente B ein Prepolymer gebildet wird, welches dann mit den übrigen Reaktanden umgesetzt wird.

In einer achtundzwanzigsten Ausführungsform betrifft die Erfindung ein Verfahren gemäß einer der Ausführungsformen 2 bis 27, dadurch gekennzeichnet, dass der Polyurethanschaum direkt an den Motor geschäumt wird.

In einer neunundzwanzigsten Ausführungsform betrifft die Erfindung ein Verfahren gemäß einer der Ausführungsformen 2 bis 27, dadurch gekennzeichnet, dass der Polyurethanschaum ein selbsttragender Formkörper ist.

In einer dreißigsten Ausführungsform betrifft die Erfindung ein Verfahren gemäß einer der Ausführungsformen 2 bis 27, dadurch gekennzeichnet, dass der Polyurethanschaum ein selbsttragender Verbundkörper ist.

In einer einunddreißigsten Ausführungsform betrifft die Erfindung ein Verfahren gemäß einer der Ausführungsformen 28 bis 30, dadurch gekennzeichnet, dass der Polyurethanschaum den zu isolierenden Körper vollständig abdichtet, d.h. komplett umschließt.

In einer zweiunddreißigsten Ausführungsform betrifft die Erfindung eine thermische und akustische Isolierung für Verbrennungsmotoren, erhältlich nach einem Verfahren gemäß einem der Ausführungsformen 1 bis 31.

In einer dreiunddreißigsten Ausführungsform betrifft die Erfindung die Verwendung von Polyurethanschaumstoffen, die erhältlich sind durch Umsetzung von Di-und/oder Polyisocyanaten mit füllstoffhaltigen Polyolen, wobei der Füllstoff ein Reaktionsprodukt aus Di- und oder Polyisocyanaten mit gegenüber Isocyanaten reaktionsfähigen Wasserstoffatomen aufweisenden Verbindungen ist, in Gegenwart von Wasser und/oder physikalischen Treibmitteln, zur Herstellung einer thermischen und akustischen Isolierung für Verbrennungsmotoren.

In einer vierunddreißigsten Ausführungsform betrifft die Erfindung die Verwendung gemäß Ausführungsform 33, wobei die Polyurethanschaumstoffe erhältlich sind durch Umsetzung von

A1    füllstoffhaltigen Polyolen, wobei der Füllstoff ein Reaktionsprodukt aus Di- und oder Polyisocyanaten mit gegenüber Isocyanaten reaktionsfähigen Wasserstoffatomen aufweisenden Verbindungen ist,

A2    gegebenenfalls weiteren füllstoffhaltigen Polyolen, die nicht unter die Definition der Komponente A1 fallen,

A3    gegebenenfalls gegenüber Isocyanaten reaktionsfähige Wasserstoffatome aufweisende Verbindungen mit einem Molekulargewicht von 400 - 18000 g/mol, die nicht unter die Definition der Komponente A1 oder A2 fallen,

A4    gegebenenfalls gegenüber Isocyanaten reaktionsfähige Wasserstoffatome aufweisenden Verbindungen mit einem Molekulargewicht von 62 - 399 g/mol, die Definition der Komponente A1 oder A2 fallen,

A5    Wasser und/oder physikalische Treibmittel,

A6    gegebenenfalls Flammschutzmittel,

A7    gegebenenfalls Hilfs- und Zusatzstoffen wie

d) Katalysatoren,

e) oberflächenaktive Zusatzstoffe,

f) ein oder mehrere Additiven ausgewählt aus der Gruppe bestehend aus Reaktionsverzögerern, Zellreglern, Pigmenten, Farbstoffen, Stabilisatoren gegen Alterungs- und Witterungseinflüsse, Weichmacher, fungistatisch und bakteriostatisch wirkende Substanzen, Füllstoffe und Trennmittel,

und

B    Di- oder Polyisocyanaten,

wobei die füllstoffhaltigen Polyole gemäß Komponente A1 in Mengen eingesetzt werden, dass der Füllstoffgehalt resultierend aus der Komponente A1 bezogen auf die Gesamtmenge der Komponenten A1, A2 und A3 2 bis 30 Gew.-% Füllstoff beträgt.

In einer fünfunddreißigsten Ausführungsform betrifft die Erfindung die Verwendung gemäß Ausführungsform 33 oder 34,

wobei die Polyurethanschaumstoffe erhältlich sind durch Umsetzung von

100 Gewichtsteilen (Gew.-Teile) einer Komponente bestehend aus A1, A2 und A3 mit der folgenden Zusammensetzung:

A1  füllstoffhaltige Polyole, wobei der Füllstoff ein Reaktionsprodukt aus Di- und oder Polyisocyanaten mit gegenüber Isocyanaten reaktionsfähigen Wasserstoffatomen aufweisenden Verbindungen ist,

A2  gegebenenfalls weitere füllstoffhaltige Polyole, die nicht unter die Definition der Komponente A1 fallen,

A3  gegebenenfalls gegenüber Isocyanaten reaktionsfähige Wasserstoffatome aufweisende Verbindungen mit einem Molekulargewicht von 400 - 18000 g/mol, die nicht unter die Definition der Komponente A1 oder A2 fallen,

A4  0 bis 10 Gew.-Teilen (bezogen auf 100 Gew.-Teile der Summe der Gewichtsteile der Komponenten A1 bis A3) gegenüber Isocyanaten reaktionsfähige Wasserstoffatome aufweisende Verbindungen mit einem Molekulargewicht von 62 - 399 g/mol, die nicht unter die Definition der Komponente A1 oder A2 fallen,

A5  0,1 bis 10 Gew.-Teilen (bezogen auf 100 Gew.-Teile der Summe der Gewichtsteile der Komponenten A1 bis A3) Wasser und/oder physikalische Treibmittel,

A6  0 bis 20 Gew.-Teilen (bezogen auf 100 Gew.-Teile der Summe der Gewichtsteile der Komponenten A1 bis A3) Flammschutzmittel,

A7  0 bis 20 Gew.-Teilen (bezogen auf 100 Gew.-Teile der Summe der Gewichtsteile der Komponenten A1 bis A3) Hilfs- und Zusatzstoffen wie

d) Katalysatoren,

e) oberflächenaktive Zusatzstoffe,

f) ein oder mehrere Additiven ausgewählt aus der Gruppe bestehend aus Reaktionsverzögerer, Zellregler, Pigmente, Farbstoffe, Stabilisatoren gegen Alterungs- und Witterungseinflüsse, Weichmacher, fungistatisch und bakteriostatisch wirkende Substanzen, Füllstoffe und Trennmittel,

und

B  Di- oder Polyisocyanaten,

wobei die füllstoffhaltigen Polyole gemäß Komponente A1 in Mengen eingesetzt werden, dass der Füllstoffgehalt resultierend aus der Komponente A1 bezogen auf die Gesamtmenge der Komponenten A1, A2 und A3 2 bis 30 Gew.-% Füllstoff beträgt und wobei die Umsetzung bei einer Kennzahl von 70 bis 120, bevorzugt 90 bis 110 erfolgt.

In einer sechsunddreißigsten Ausführungsform betrifft die Erfindung die Verwendung gemäß Ausführungsform 34 oder 35, wobei die füllstoffhaltigen Polyole gemäß Komponente A1 in Mengen eingesetzt werden, dass der Füllstoffgehalt resultierend aus der Komponente A1 bezogen auf die Gesamtmenge der Komponenten A1, A2 und A3 4 bis 25 Gew.-% Füllstoff beträgt.

In einer siebenunddreißigsten Ausführungsform betrifft die Erfindung die Verwendung gemäß Ausführungsform 34 oder 35, wobei die füllstoffhaltigen Polyole gemäß Komponente A1 in Mengen eingesetzt werden, dass der Füllstoffgehalt resultierend aus der Komponente A1 bezogen auf die Gesamtmenge der Komponenten A1, A2 und A3 7 bis 22 Gew.-% Füllstoff beträgt.

In einer achtunddreißigsten Ausführungsform betrifft die Erfindung die Verwendung gemäß einer der Ausführungsformen 34 bis 37, wobei es sich bei Komponente A1 um

A1.1  füllstoffhaltige Polyole, mit einem Füllstoffaufbau aus

A1.1.1 Polyharnstoffdispersionen, die durch Umsetzung von Di- und/oder Polyisocyanaten mit primären und/oder sekundären Aminogruppen aufweisenden Di- und/oder Polyaminen und/oder Hydrazinen in einer Polyolkomponente erhältlich sind (PHD-Polyole A1.1),

und/oder

A1.2  füllstoffhaltige Polyole, mit einem Füllstoffaufbau aus

A1.2.1 Urethangruppen enthaltenden Dispersionen, die durch durch Umsetzung von Alkanolaminen mit Di- und/oder Polyisocyanaten in einer Polyolkomponente erhältlich sind,

handelt.

In einer neununddreißigsten Ausführungsform betrifft die Erfindung die Verwendung gemäß Ausführungsform 38, wobei die Komponenten A1.1 und A 1.2 in Mischung eingesetzt werden.

In einer vierzigsten Ausführungsform betrifft die Erfindung die Verwendung gemäß Ausführungsform 38 oder 39, wobei die Komponenten A1.1 und A 1.2 in einem Gewichtsverhältnis von A1.1 :A 1.2 entsprechend ≥ 30 : 70 bis ≤ 70 : 30 eingesetzt werden.

In einer einundvierzigsten Ausführungsform betrifft die Erfindung die Verwendung gemäß Ausführungsform 38, wobei als Komponente A1 ausschließlich Komponente A1.1 eingesetzt wird.

In einer zweiundvierzigsten Ausführungsform betrifft die Erfindung die Verwendung gemäß Ausführungsform 38, wobei als Komponente A1 ausschließlich Komponente A1.2 eingesetzt wird.

In einer dreiundvierzigsten Ausführungsform betrifft die Erfindung die Verwendung gemäß einer der Ausführungsformen 34 bis 42, wobei zur Herstellung der füllstoffhaltigen Polyole A1, bzw. A1.1 und A1.2 1 bis 8 primäre und/oder sekundäre Hydroxylgruppen aufweisende Verbindungen mit einem Molekulargewicht von 400 bis 18000 g/mol verwendet werden.

In einer vierundvierzigsten Ausführungsform betrifft die Erfindung die Verwendung gemäß einer der Ausführungsformen 34 bis 43, wobei zur Herstellung der füllstoffhaltigen Polyole A1, bzw. A1.1 und A1.2 Polyetherpolyole verwendet werden.

In einer fünfundvierzigsten Ausführungsform betrifft die Erfindung die Verwendung gemäß einer der Ausführungsformen 34 bis 44, wobei keine Verbindungen gemäß Komponente A2 enthalten sind.

In einer sechsundvierzigsten Ausführungsform betrifft die Erfindung die Verwendung gemäß einer der Ausführungsformen 34 bis 45, wobei die gefüllten Polyole gemäß Komponente A2 in Mengen eingesetzt werden, dass der Füllstoffgehalt resultierend aus der Komponente A2, bezogen auf die Gesamtmenge der Komponenten A1, A2 und A3 ≤ 10 Gew.-% Füllstoff beträgt.

In einer siebenundvierzigsten Ausführungsform betrifft die Erfindung die Verwendung gemäß einer der Ausführungsformen 34 bis 45, wobei die gefüllten Polyole gemäß Komponente A2 in Mengen eingesetzt werden, dass der Füllstoffgehalt resultierend aus der Komponente A2, bezogen auf die Gesamtmenge der Komponenten A1, A2 und A3 ≤ 5 Gew.-% Füllstoff beträgt.,

In einer achtsundvierzigsten Ausführungsform betrifft die Erfindung die Verwendung gemäß einer der Ausführungsformen 34 bis 45, wobei die gefüllten Polyole gemäß Komponente A2 in Mengen eingesetzt werden, dass der Füllstoffgehalt resultierend aus der Komponente A2, bezogen auf die Gesamtmenge der Komponenten A1, A2 und A3 ≤ 2 Gew.-% Füllstoff beträgt.

In einer neunundvierzigsten Ausführungsform betrifft die Erfindung die Verwendung gemäß einer der Ausführungsformen 34 bis 48, wobei die Komponenten A1 (enthaltend A1.1 und/oder A1.2) und A3 in einem Gewichtsverhältnis von A1 : A3 = 100 : 0 bis 10 : 90 eingesetzt werden.

In einer fünfzigsten Ausführungsform betrifft die Erfindung die Verwendung gemäß einer der Ausführungsformen 34 bis 48, wobei die Komponenten A1 (enthaltend A1.1 und/oder A1.2) und A3 in einem Gewichtsverhältnis von A1 : A3 = 70 : 30 bis 30 : 70 eingesetzt werden.

In einer einundfünfzigsten Ausführungsform betrifft die Erfindung die Verwendung gemäß einer der Ausführungsformen 34 bis 49, wobei keine Verbindungen gemäß Komponente A3 eingesetzt werden.

In einer zweiundfünfzigsten Ausführungsform betrifft die Erfindung die Verwendung gemäß einer der Ausführungsformen 34 bis 51, wobei keine Verbindungen gemäß Komponente A6 eingesetzt werden.

In einer dreiundfünfzigsten Ausführungsform betrifft die Erfindung die Verwendung gemäß einer der Ausführungsformen 34 bis 52, wobei als Komponente B mindestens eine Verbindung ausgewählt aus der Gruppe bestehend aus 4,4'- und 2,4'- und 2,2'-Diphenylmethandiisocyanat und Polyphenylpolymethylenpolyisocyanat ("Mehrkern-MDI") eingesetzt wird.

In einer vierundfünfzigsten Ausführungsform betrifft die Erfindung die Verwendung gemäß einer der Ausführungsformen 34 bis 52, wobei als Komponente B eine Diphenylmethandiisocyanat-Mischung eingesetzt wird, bestehend aus

a) 35 bis 95 Gew.-% 4,4'-Diphenylmethandiisocyanat und
b) 5 bis 65 Gew.-% 2,2'-Diphenylmethandiisocyanat und/oder 2,4'-Diphenylmethandiisocyanat und
c) 0 bis 56 Gew.-%, bevorzugt 0 bis 52 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

In einer fünfundfünfzigsten Ausführungsform betrifft die Erfindung die Verwendung gemäß einer der Ausführungsformen 34 bis 52, wobei als Komponente B eine Diphenylmethandiisocyanat-Mischung eingesetzt, bestehend aus

a) 40 bis 42 Gew.-% 4,4'-Diphenylmethandiisocyanat und
b) 6 bis 9 Gew.-% 2,2'-Diphenylmethandiisocyanat und/oder 2,4'-Diphenylmethandiiso-cyanat und
c) 50 bis 52 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

In einer sechsundfünfzigsten Ausführungsform betrifft die Erfindung die Verwendung gemäß einer der Ausführungsformen 34 bis 55, wobei die Polyurethanschaumstoffe eine Rohdichte von 80 bis 300 kg/m$^3$ aufweisen.

In einer siebenundfünfzigsten Ausführungsform betrifft die Erfindung die Verwendung gemäß einer der Ausführungsformen 34 bis 55, wobei die Polyurethanschaumstoffe eine Rohdichte von 100 bis 250 kg/m$^3$ aufweisen.

In einer achtundfünfzigsten Ausführungsform betrifft die Erfindung die Verwendung gemäß einer der Ausführungsformen 34 bis 57, wobei bei der Herstellung der Polyurethanschäume die Komponenten A1 bis A7 und B in einem Einstufenverfahren zur Reaktion gebracht werden.

In einer neunundfünfzigsten Ausführungsform betrifft die Erfindung die Verwendung gemäß einer der Ausführungsformen 34 bis 57, wobei bei der Herstellung der Polyurethanschäume zunächst aus der Polyolkomponente A3 und der Isocyanatkomponente B ein Prepolymer gebildet wird, welches dann mit den übrigen Reaktanden umgesetzt wird.

In einer sechszigsten Ausführungsform betrifft die Erfindung die Verwendung gemäß einer der Ausführungsformen 34 bis 59, dadurch gekennzeichnet, dass der Polyurethanschaum direkt an den Motor geschäumt wird.

In einer einundsechszigsten Ausführungsform betrifft die Erfindung die Verwendung gemäß einer der Ausführungsformen 34 bis 59, dadurch gekennzeichnet, dass der Polyurethanschaum ein selbsttragender Formkörper ist.

In einer zweiundsechszigsten Ausführungsform betrifft die Erfindung die Verwendung gemäß einer der Ausführungsformen 34 bis 59, dadurch gekennzeichnet, dass der Polyurethanschaum ein selbsttragender Verbundkörper ist.

In einer dreiundsechszigsten Ausführungsform betrifft die Erfindung die Verwendung gemäß einer der Ausführungsformen 60 bis 62, dadurch gekennzeichnet, dass der Polyurethanschaum den zu isolierenden Körper vollständig abdichtet, d.h. komplett umschließt.

In einer vierundsechszigsten Ausführungsform betrifft die Erfindung eine thermisch und akustische Isolierung für Verbrennungsmotoren, herstellbar unter Verwendung von Polyurethanschaumstoffen, die erhältlich sind durch Umsetzung von Di-und/oder Polyisocyanaten mit füllstoffhaltigen Polyolen, wobei der Füllstoff ein Reaktionsprodukt aus Di- und oder Polyisocyanaten mit gegenüber Isocyanaten reaktionsfähigen Wasserstoffatomen aufweisenden Verbindungen ist, in Gegenwart von Wasser und/oder physikalischen Treibmitteln, gemäß einer der Ausführungsformen 33 bis 63.

**Patentansprüche**

1. Verfahren zur Herstellung einer thermischen und akustischen Isolierung für Verbrennungsmotoren unter Verwendung von Polyurethanschaumstoffen, die erhältlich sind durch Umsetzung von Di-und/oder Polyisocyanaten mit füllstoffhaltigen Polyolen, wobei der Füllstoff ein Reaktionsprodukt aus Di- und oder Polyisocyanaten mit gegenüber Isocyanaten reaktionsfähigen Wasserstoffatomen aufweisenden Verbindungen ist, in Gegenwart von Wasser und/oder physikalischen Treibmitteln.

2. Verfahren gemäß Anspruch 1, wobei die Polyurethanschaumstoffe erhältlich sind durch Umsetzung von

   A1 füllstoffhaltigen Polyolen, wobei der Füllstoff ein Reaktionsprodukt aus Di- und oder Polyisocyanaten mit gegenüber Isocyanaten reaktionsfähigen Wasserstoffatomen aufweisenden Verbindungen ist,
   A2 gegebenenfalls weiteren füllstoffhaltigen Polyolen, die nicht unter die Definition der Komponente A1 fallen,
   A3 gegebenenfalls gegenüber Isocyanaten reaktionsfähige Wasserstoffatome aufweisende Verbindungen mit einem Molekulargewicht von 400 - 18000 g/mol, die nicht unter die Definition der Komponente A1 oder A2 fallen,
   A4 gegebenenfalls gegenüber Isocyanaten reaktionsfähige Wasserstoffatome aufweisenden Verbindungen mit einem Molekulargewicht von 62 - 399 g/mol, die Definition der Komponente A1 oder A2 fallen,
   A5 Wasser und/oder physikalische Treibmittel,
   A6 gegebenenfalls Flammschutzmittel,
   A7 gegebenenfalls Hilfs- und Zusatzstoffen wie

      a) Katalysatoren,
      b) oberflächenaktive Zusatzstoffe,
      c) ein oder mehrere Additiven ausgewählt aus der Gruppe bestehend aus Reaktionsverzögerern, Zellreglern, Pigmenten, Farbstoffen, Stabilisatoren gegen Alterungs- und Witterungseinflüsse, Weichmacher, fungistatisch und bakteriostatisch wirkende Substanzen, Füllstoffe und Trennmittel,

   und

   B Di- oder Polyisocyanaten,

wobei die füllstoffhaltigen Polyole gemäß Komponente A1 in Mengen eingesetzt werden, so dass der Füllstoffgehalt resultierend aus der Komponente A1 bezogen auf die Gesamtmenge der Komponenten A1, A2 und A3 2 bis 30 Gew.-% Füllstoff beträgt.

3. Verfahren gemäß Anspruch 1 oder 2, wobei Polyurethanschaumstoffe erhältlich sind durch Umsetzung von 100 Gewichtsteilen (Gew.-Teilen) einer Komponente bestehend aus A1, A2 und A3 mit der folgenden Zusammensetzung:

A1 füllstoffhaltige Polyole, wobei der Füllstoff ein Reaktionsprodukt aus Di- und oder Polyisocyanaten mit gegenüber Isocyanaten reaktionsfähigen Wasserstoffatomen aufweisenden Verbindungen ist,
A2 gegebenenfalls weitere füllstoffhaltige Polyole, die nicht unter die Definition der Komponente A1 fallen,
A3 gegebenenfalls gegenüber Isocyanaten reaktionsfähige Wasserstoffatome aufweisende Verbindungen mit einem Molekulargewicht von 400 - 18000 g/mol, die nicht unter die Definition der Komponente A1 oder A2 fallen,
A4 0 bis 10 Gew.-Teilen (bezogen auf 100 Gew.-Teile der Summe der Gewichtsteile der Komponenten A1 bis A3) gegenüber Isocyanaten reaktionsfähige Wasserstoffatome aufweisende Verbindungen mit einem Molekulargewicht von 62 - 399 g/mol, die nicht unter die Definition der Komponente A1 oder A2 fallen,
A5 0,1 bis 10 Gew.-Teilen (bezogen auf 100 Gew.-Teile der Summe der Gewichtsteile der Komponenten A1 bis A3) Wasser und/oder physikalische Treibmittel,
A6 0 bis 20 Gew.-Teilen (bezogen auf 100 Gew.-Teile der Summe der Gewichtsteile der Komponenten A1 bis A3) Flammschutzmittel,
A7 0 bis 20 Gew.-Teilen (bezogen auf 100 Gew.-Teile der Summe der Gewichtsteile der Komponenten A1 bis A3) Hilfs- und Zusatzstoffen wie

a) Katalysatoren,
b) oberflächenaktive Zusatzstoffe,
c) ein oder mehrere Additiven ausgewählt aus der Gruppe bestehend aus Reaktionsverzögerer, Zellregler, Pigmente, Farbstoffe, Stabilisatoren gegen Alterungs- und Witterungseinflüsse, Weichmacher, fungistatisch und bakteriostatisch wirkende Substanzen, Füllstoffe und Trennmittel,

und

B Di- oder Polyisocyanaten,

wobei die füllstoffhaltigen Polyole gemäß Komponente A1 in Mengen eingesetzt werden, so dass der Füllstoffgehalt resultierend aus der Komponente A1 bezogen auf die Gesamtmenge der Komponenten A1, A2 und A3 2 bis 30 Gew.-% Füllstoff beträgt und wobei die Umsetzung bei einer Kennzahl von 70 bis 120, bevorzugt 90 bis 110 erfolgt.

4. Verfahren gemäß einem der Ansprüche 2 bis 3, wobei es sich bei Komponente A1 um

A1.1 füllstoffhaltige Polyole, mit einem Füllstoffaufbau aus
A1.1.1 Polyharnstoffdispersionen, die durch Umsetzung von Di- und/oder Polyisocyanaten mit primären und/oder sekundären Aminogruppen aufweisenden Di- und/oder Polyaminen und/oder Hydrazinen in einer Polyolkomponente erhältlich sind,

und/oder

A1.2 füllstoffhaltige Polyole, mit einem Füllstoffaufbau aus

A1.2.1 Urethangruppen enthaltenden Dispersionen, die durch durch Umsetzung von Alkanolaminen mit Di- und/oder Polyisocyanaten in einer Polyolkomponente erhältlich sind,

handelt.

5. Verfahren gemäß Anspruch 4, wobei als Komponente A1 ausschließlich Komponente A1.1 oder Komponente A1.2 eingesetzt wird.

6. Verfahren gemäß einem der Ansprüche 2 bis 5, wobei zur Herstellung der füllstoffhaltigen Polyole A1, bzw. A1.1 und A1.2 1 bis 8 primäre und/oder sekundäre Hydroxylgruppen aufweisende Verbindungen mit einem Molekulargewicht von 400 bis 18000 g/mol verwendet werden.

7. Verfahren gemäß Anspruch 6, wobei zur Herstellung der füllstoffhaltigen Polyole A1, bzw. A1.1 und A1.2 Polyetherpolyole verwendet werden.

8. Verfahren gemäß einem der Ansprüche 2 bis 7, wobei keine Verbindungen gemäß Komponente A2 eingesetzt werden.

9. Verfahren gemäß einem der Ansprüche 2 bis 7, wobei die gefüllten Polyole gemäß Komponente A2 in Mengen eingesetzt werden, dass der Füllstoffgehalt resultierend aus der Komponente A2, bezogen auf die Gesamtmenge der Komponenten A1, A2 und A3 ≤ 10 Gew.-%, vorzugsweise ≤ 5 Gew.-%, besonders bevorzugt ≤ 2 Gew.-% Füllstoff beträgt.

10. Verfahren gemäß einem der Ansprüche 2 bis 9, wobei die Komponenten A1 (enthaltend A1.1 und/oder A1.2) und A3 in einem Gewichtsverhältnis von A1 : A3 = 100 : 0 bis 10 : 90, besonders bevorzugt in einem Gewichtsverhältnis von A1 : A3 = 70 : 30 bis 30 : 70 eingesetzt werden.

11. Verfahren gemäß einem der Ansprüche 2 bis 10, wobei keine Verbindungen gemäß Komponente A3 eingesetzt werden.

12. Verfahren gemäß einem der Ansprüche 2 bis 11, wobei keine Verbindungen gemäß Komponente A6 eingesetzt werden.

13. Verfahren gemäß einem der Ansprüche 2 bis 12, wobei als Komponente B mindestens eine Verbindung ausgewählt aus der Gruppe bestehend aus 4,4'- und 2,4'- und 2,2'-Diphenylmethandiisocyanat und Polyphenylpolymethylenpolyisocyanat ("Mehrkern-MDI") eingesetzt wird.

14. Verfahren gemäß einem der Ansprüche 2 bis 12, wobei als Komponente B eine Diphenylmethandiisocyanat-Mischung eingesetzt wird, bestehend aus

a) 35 bis 95 Gew.-% 4,4'-Diphenylmethandiisocyanat und
b) 5 bis 65 Gew.-% 2,2'-Diphenylmethandiisocyanat und/oder 2,4'-Diphenylmethandiisocyanat und
c) 0 bis 56 Gew.-%, bevorzugt 0 bis 52 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

15. Verfahren gemäß einem der Ansprüche 2 bis 14, wobei die Polyurethanschaumstoffe eine Rohdichte von 80 bis 300 kg/m$^3$, bevorzugt 100 bis 250 kg/m$^3$ aufweisen.

16. Verfahren gemäß einem der Ansprüche 2 bis 15, **dadurch gekennzeichnet, dass** der Polyurethanschaum direkt an den Motor geschäumt wird oder ein selbsttragender Formkörper ist oder ein selbsttragender Verbundkörper ist.

17. Thermisch und akustische Isolierung für Verbrennungsmotoren, erhältlich durch ein Verfahren gemäß einem der Ansprüche 1 bis 16.

Europäisches
Patentamt

European
Patent Office

Office européen
des brevets

# EUROPÄISCHER RECHERCHENBERICHT

**Nummer der Anmeldung**

EP 17 18 0191

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br>A | US 2016/145377 A1 (HONKOMP DAVID J [US]) 26. Mai 2016 (2016-05-26)<br>* Absatz [0001]; Anspruch 1 *<br>* Absatz [0032] *<br>* Absatz [0034] - Absatz [0036]; Beispiel 1; Tabelle 1 *<br>----- | 1-7,10, 12-17<br>8,9,11 | INV.<br>F02B77/11<br>C08G18/08<br>C08G18/40<br>C08G18/76<br><br>ADD.<br>C08G101/00 |
| X,D<br><br>A | WO 2011/003590 A2 (BAYER MATERIALSCIENCE AG [DE]; KLESCZEWSKI BERT [DE]; OTTEN MANDUELA []) 13. Januar 2011 (2011-01-13)<br>* Seite 1, Zeile 4 - Zeile 7; Anspruch 1 *<br>* Beispiele 2-5; Tabelle 1 *<br>* Seite 8, Zeile 36 - Seite 9, Zeile 3 *<br>----- | 1-8,11, 13,16,17<br>9,10,12, 14,15 | |
| X<br><br>A | DE 199 62 911 A1 (BAYER AG [DE]) 5. Juli 2001 (2001-07-05)<br>* Seite 2, Zeile 3 - Zeile 4; Ansprüche 1,2 *<br>* Beispiele 3,4; Tabelle 1 *<br>* Beispiel 23; Tabelle 5 *<br>----- | 1-8, 10-13, 16,17<br>9,14,15 | |

**RECHERCHIERTE SACHGEBIETE (IPC)**

C08G
F02B

Der vorliegende Recherchenbericht wurde für alle Patentansprüche erstellt

| Recherchenort | Abschlußdatum der Recherche | Prüfer |
|---|---|---|
| München | 2. November 2017 | Paulus, Florian |

## ANHANG ZUM EUROPÄISCHEN RECHERCHENBERICHT
## ÜBER DIE EUROPÄISCHE PATENTANMELDUNG NR.

EP 17 18 0191

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-11-2017

| Im Recherchenbericht angeführtes Patentdokument | Datum der Veröffentlichung | Mitglied(er) der Patentfamilie | Datum der Veröffentlichung |
|---|---|---|---|
| US 2016145377 A1 | 26-05-2016 | AU 2014293351 A1 | 18-02-2016 |
| | | CN 105392814 A | 09-03-2016 |
| | | EP 3024864 A1 | 01-06-2016 |
| | | JP 2016525613 A | 25-08-2016 |
| | | US 2016145377 A1 | 26-05-2016 |
| | | WO 2015013226 A1 | 29-01-2015 |
| WO 2011003590 A2 | 13-01-2011 | CA 2767469 A1 | 13-01-2011 |
| | | CN 102471433 A | 23-05-2012 |
| | | EP 2451856 A2 | 16-05-2012 |
| | | ES 2443834 T3 | 20-02-2014 |
| | | JP 2012532237 A | 13-12-2012 |
| | | RU 2012104326 A | 20-08-2013 |
| | | US 2012108690 A1 | 03-05-2012 |
| | | WO 2011003590 A2 | 13-01-2011 |
| DE 19962911 A1 | 05-07-2001 | AT 262548 T | 15-04-2004 |
| | | AU 3157701 A | 09-07-2001 |
| | | BR 0016702 A | 24-09-2002 |
| | | CA 2394712 A1 | 05-07-2001 |
| | | DE 19962911 A1 | 05-07-2001 |
| | | DK 1246858 T3 | 12-07-2004 |
| | | EP 1246858 A1 | 09-10-2002 |
| | | ES 2215789 T3 | 16-10-2004 |
| | | HU 0204125 A2 | 28-03-2003 |
| | | NO 20023031 A | 21-06-2002 |
| | | PL 355750 A1 | 17-05-2004 |
| | | PT 1246858 E | 30-07-2004 |
| | | TR 200400759 T4 | 21-06-2004 |
| | | TW 512152 B | 01-12-2002 |
| | | US 2003045593 A1 | 06-03-2003 |
| | | WO 0148047 A1 | 05-07-2001 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19935335
- WO 2014195153 A
- WO 2011003590 A
- EP 0358021 A
- EP 0358950 A
- EP 0373462 A
- EP 0373457 A
- WO 2009106236 A
- DE 1694142 A
- DE 1694215 A
- DE 1720768 A
- GB 2072204 A
- DE 3103757 A1
- US 4374209 A
- EP 0007502 A
- US 4089835 A
- US 4260530 A
- EP 0000389 A
- EP 0176013 A
- US 2764565 A

**In der Beschreibung aufgeführte Nicht-Patentliteratur**

- Kunststoff-Handbuch Band VII, Polyurethane. Carl Hanser Verlag, 1966
- Neuauflage dieses Buches. Carl Hanser Verlag, 1993
- Kunststoff-Handbuch. Carl-Hanser-Verlag, 1993, vol. VII, 104-127
- **W. SIEFKEN.** *Justus Liebigs Annalen der Chemie,* vol. 562, 75-136
- Kunststoff-Handbuch. Carl-Hanser-Verlag, 1966, vol. VII, 121-205